# EUROPEAN PATENT APPLICATION

(11) **EP 4 826 473 A1**
(43) Date of publication of application: **21.10.2026**
(21) Application number: 26168170.4
(22) Date of filing: 26.03.2026
(51) Int. Cl.: G05B 19/406, G01N 21/89

(54) **INTELLIGENT DEFECT GROUPING AND VISUALIZATION SYSTEMS**

(30) Priority: 17.04.2025 IN 202511037249
(71) Applicant: Honeywell International Inc., Charlotte, NC 28202 (US)
(72) Inventor: MURUGAN, Kalidoss, Charlotte, 28202 (US); JAYARAMAN, Senthilkumar, Charlotte, 28202 (US); KRISHNA, Ajay, Charlotte, 28202 (US)
(74) Representative: Haseltine Lake Kempner LLP

(57) **Abstract**

An example method for method of determining quality of a sheet roll comprises: monitoring data indicative of defects on either side of the sheet roll comprising data indicative of: surface defects of the sheet roll; registration defects of the sheet roll; and quality and control system (QCS) defects of the sheet roll. The example method further comprises grouping the defects into a group of defects; calculating a weighted centroid for the group of defects; and displaying a representation of the group of defects at the weighted centroid.

## Description

### Technical Field

The present disclosure generally relates to sheet making control systems and, more particularly, to sheet making control systems where measuring devices scan across a moving or travelling sheet. In particular, the present disclosure relates to quality control of continuous sheet materials and, more particularly, to employing intelligent grouping algorithms and visualization techniques to monitor sheet materials, such as electrodes used in lithium-ion batteries, and displaying defect information in an integrated, easy-to-visualize fashion.

### Background

On-line measurements are used to detect properties of sheet materials during manufacture to enable prompt control of the sheet making processes and, thus, to assure sheet quality while reducing the quantity of substandard sheet material produced. For instance, in the fabrication of electrodes for lithium-ion batteries, metal foil from metal rolls is continuously coated with a mixture of active material. Slitting machines then cut the finished coated metal foils into sheets of electrodes that are assembled into cells and batteries.

To achieve and maintain the quality of continuous, roll-to-roll production of electrodes, constant online measurements of quality factors-strongly linked to battery performance-are essential. Faulty batteries may result if upstream defects are not detected and corrected or removed. Multiple discrete defect monitoring systems are commonly employed in lithium-ion battery production, including visual systems (cameras) and quality control system (QCS) scanning systems.

One of the main complications in making on-line measurements during sheet making is that the physical properties of sheet materials usually vary in both the machine direction (MD) and the cross direction (CD). The "machine direction" refers to the direction of travel of the sheet material during manufacture, while the "cross direction" refers to the direction across the surface of the sheet, perpendicular to the MD.

To detect variations in sheet materials, scanning sensors are employed that periodically traverse back and forth across a sheet making machine in the CD while detecting values of a selected sheet property, such as basis weight or caliper, along each scan. Normally, the sheet being produced is traversed from edge to edge during each scan.

In practice, measurement information provided by scanning sensors is typically assembled after each scan to generate a profile of the detected sheet property in the CD. Each profile comprises a succession of sheet measurements at adjacent locations in the cross direction. These profiles allow operators to easily identify cross directional variations in sheet properties. Based on these detected variations, appropriate control adjustments can be made to the sheet making machine with the goal of reducing profile variations in both the CD and MD.

A scanning sensor that periodically traverses a sheet at generally constant speed cannot measure the selected sheet property at locations aligned exactly perpendicular to the sheet's longitudinal edges. Due to the sheet's velocity, scanning sensors actually travel diagonally across the sheet surface, resulting in consecutive scanning paths that form a zig-zag pattern relative to the direction perpendicular to the sheet's longitudinal edges. Consequently, scanning sensors only measure a small portion of the sheet along the diagonal zig-zag path. Typically, an average of profile measurements is calculated after each scan-commonly called the "last average."

Most manufacturing plants display real-time measurement data as color maps to illustrate variations detected on the sheet. For example, MD data from sensors are presented in vertical columns, with each column representing a different strip of coating. In a six-strip coating section, six columns are displayed, with the left column representing recent data and the right column representing earlier data. The top of the left column shows real-time data, while the color legend correlates specific hues to particular measurement values. As data changes, the operator observes corresponding color shifts, indicating potential variations or defects.

However, color maps can be challenging to interpret since the operator must mentally associate color and pattern changes with specific defect types. While a pattern change may suggest a defect, the color map alone does not definitively identify the defect type. In lithium-ion battery manufacturing, defects such as decarburization, bubbling, air bubbling, holes, craters, and dark points can impact surface quality. Color mapping alone is insufficient to differentiate between these defect types.

Additionally, because scanning sensors move diagonally across the sheet width, their positions are represented as single CD locations on the color map. This diagonal scan path appears as a single horizontal line in the corresponding column or map, distorting the operator's view and failing to reveal defects that fall outside the scan path.

To complement color maps, manufacturing plants also use profile views to monitor variations and defects on the sheet. For instance, a plot can display basis weight (g/m²) versus bin for a sheet. Crossing either a threshold lines indicates a defect in that sheet area. Another plot displays scanner velocity (mm/sec.) versus bin, allowing operators to correlate the scanner's speed with measurement data.

Current manufacturing techniques employ both scanning and stationary monitoring systems positioned at various points along the MD. Some monitoring systems are placed early in the process, while others are positioned farther downstream. This arrangement allows operators to monitor different upstream stages of the manufacturing process, ensuring data is available throughout production. However, these standalone monitoring systems create challenges for plant operators and engineers, who must manually correlate data from multiple systems to analyze the same section of processed material. This fragmented approach makes it difficult to make real-time quality control decisions, resulting in a higher percentage of defective batteries that must be scrapped.

Hence, what is desired is systems and methods that can readily detect manufacturing defects (e.g., systematic defects occurring periodically) in discontinuous manufactured products such as in roll-to-roll lithium ion battery electrodes, discern between machine and cross direction defects, detect defects on both sides (e.g., an upper and lower side of a roll), can intelligently grouping defects, and can readily display the clustered defects in an integrated, easy-to-visualize fashion.

### Summary

The present disclosure relates to quality control of continuous sheet materials and, more particularly, to employing intelligent grouping algorithms and visualization techniques to monitor sheet materials, such as electrodes used in lithium-ion batteries, and displaying defect information in an integrated, easy-to-visualize fashion. While various embodiments are described herein the in context of roll-to-roll lithium ion battery electrodes, the present disclosure is not so limited. For instance, the present disclosure is applicable to other discontinuous and continuous (e.g., paper making) manufacturing processes.

As detailed herein, the present disclosure provides an intelligent defect grouping and visualization systems. The intelligent defect grouping and visualization systems herein can use various grouping methodologies and algorithms such as a spatial proximity based approach and grid mapping based approach. Hence, the intelligent defect grouping and visualization systems herein can intelligently group and display defects across long sheet lengths while maintaining good defect visibility (e.g., good defect visibility even with different screen resolutions, etc.). For instance, the intelligent defect grouping and visualization systems herein can implement weighted centroid calculations and display a centroid of a group of one or more different types of defects (e.g., as detected from one or more different types of sensors). Additionally, some embodiments, the grid based approaches herein can utilize resolution-dependent grid sizing to automatically adapt defect visualization based on display constraints (e.g., the resolution of one or more displays or monitors).

The present invention is directed to integrated quality monitoring techniques that enable a plant operator to simultaneously view and analyze data that are derived from a plurality of sensors. In the case of lithium-ion battery production, the operator can view upstream quality issues such as defects from the anode section or cathode section. Operators can make effective analysis of the sheet coating from multiple sensors and camera systems in real time. In the event that defects in the continuous sheet of material are detected and the locations and sources of the defects are then identified, the operator can quickly initiate appropriate corrective measures (e.g., reconfiguring actuators associated with the lithium-ion battery production system such as those described herein, etc.) to resolve the problem. The above improvements collectively enhance system performance, efficiency, and accuracy, as detailed herein.

A particular aspect of the present disclosure is an illustrative method of determining quality of a sheet roll, the method comprising: monitoring data indicative of defects on either side of the sheet roll comprising data indicative of: surface defects of the sheet roll; registration defects of the sheet roll; and quality and control system (QCS) defects of the sheet roll; and grouping the defects into a group of defects; calculating a weighted centroid for the group of defects; and displaying a representation of the group of defects at the weighted centroid.

In some aspects, which may be used in conjunction with or as an alternative to other aspects herein, wherein the weighted centroid is based on a respective severity weights of each of the defects.

In some aspects, which may be used in conjunction with or as an alternative to other aspects herein, further comprising calculating a position of the weighted centroid according to (*w*1*x*1+*w*1*x*2+···*wnxn*) / (*w*11*+w*2*+*···*wn*) , (*w*1*y*1*+w*2*y*2+···*wnyn*) / (*w*1+*w*2+···*wn*); where: "w1", "w2", ..., "wn" represent individual defect weights of the defects; "x1", "x2", ..., "xn" are cross direction positions of the defects; and "y1", "y2", ..., "yn" are machine direction positions of the defects.

In some aspects, which may be used in conjunction with or as an alternative to other aspects herein, wherein the representation of the group of defects is indicative of: which side of the sheet roll the group of defects are located; a location on the side of the sheet roll of the group of defects; a type of the group of defects; a severity of the group of defects; or any combination thereof.

In some aspects, which may be used in conjunction with or as an alternative to other aspects herein, wherein the representation of the group of defects is indicative of which side of the sheet roll the group of defects are located.

In some aspects, which may be used in conjunction with or as an alternative to other aspects herein, further comprising: calculating a spatial grid for the sheet roll; and grouping the defects based on locations in the spatial grid.

In some aspects, which may be used in conjunction with or as an alternative to other aspects herein, further comprising calculating a quantity of grid cells in the spatial grid as a function of dimensions of the display, horizontal and vertical zoom levels within a display application and a minimum grid cell size.

In some aspects, which may be used in conjunction with or as an alternative to other aspects herein, further comprising calculating the total quantity of grid cells according to:
a horizontal grid cell count = f(W, HZ, MGS) = (W x (HZ/100))/MGS;
a vertical grid cell count = f(H, VZ, MGS) = (H x (VZ/100))/MGS; and
a total grid cell count = f(H, W, HZ, VZ, MGS) = horizontal cell count x vertical cell count; and wherein:
   "H" is a vertical height a screen;
   "W" is a horizontal width of the screen;
   "HZ" is a horizontal zoom within the application display,
   "VZ" is a vertical zoom within the application display, and
   "MGS" is a minimum grid cell size.

In some aspects, which may be used in conjunction with or as an alternative to other aspects herein, further comprising grouping defects within same grid cell of a plurality of grid cells.

In some aspects, which may be used in conjunction with or as an alternative to other aspects herein, further comprising grouping an edge defect located on a grid boundary between two or more adjacent grid cells by:

In some aspects, which may be used in conjunction with or as an alternative to other aspects herein, calculating a distance to a nearby defect in one or more grid cells; and grouping the edge defect with a most proximate defect in the one or more adjacent grid cells.

In some aspects, which may be used in conjunction with or as an alternative to other aspects herein, further comprising grouping the defects based on Euclidean distances between defect centers.

In some aspects, which may be used in conjunction with or as an alternative to other aspects herein, wherein the Euclidean distances are determined according to d = √((x2-x1)² + (y2-y1)²) where x1,x2 are cross direction positions and y1,y2 are machine direction positions.

In some aspects, which may be used in conjunction with or as an alternative to other aspects herein, further comprising: comparing the Euclidean distances to a configurable distance threshold value; and grouping defects having Euclidean distance that are within the configurable distance threshold value.

In some aspects, which may be used in conjunction with or as an alternative to other aspects herein, further comprising taking a corrective action based on the representation of the group of defects at the weighted centroid.

Another aspects of the present disclosure is a non-transitory, computer-readable medium including instructions that when executed by a processor cause the processor to: monitor data indicative of defects on either side of a continuous sheet roll the moves in a machine direction (MD), the data comprising data indicative of: surface defects of the continuous sheet roll; registration defects of the continuous sheet roll; and quality and control system (QCS) defects of the continuous sheet roll; group the defects into a group of defects based on Euclidean distances between the defects or locations of the defects in a spatial grid of the continuous sheet roll; calculate a weighted centroid for the group of defects; and display an image including a representation of the group of defects at the weighted centroid.

In some aspects, which may be used in conjunction with or as an alternative to other aspects herein, further comprising concurrently displaying: a first representation indicative of a first group of defects on a first side the continuous sheet roll; and a second representation indicative of a second group of defects on a second side of the continuous sheet roll, wherein the second representation is different than the first representation.

In some aspects, which may be used in conjunction with or as an alternative to other aspects herein, wherein: the first representation is indicative of the MD and the cross direction (CD) location of the weighted centroid on the first side of the continuous sheet roll, wherein the CD is perpendicular to the MD; and the second representation is indicative of the MD and the CD location of the weighted centroid on the second side of the continuous sheet roll.

In some aspects, which may be used in conjunction with or as an alternative to other aspects herein, wherein zooming in on the displayed representation of group of defects causes display of representations of each of the individual defects in the group of defects.

Another aspect of the present disclosure of the present disclosure is a system for monitoring the production of a continuous sheet roll which travels in the machine direction (MD) that comprises: a computer device that is configured to: receive data from a plurality of sensors that measure one or more characteristics of the continuous sheet roll, the data being indicative of surface defects of the continuous sheet roll, registration defects of the continuous sheet roll, and quality and control system (QCS) defects of the continuous sheet roll; group the defects into a group of defects based on Euclidean distances between the defects or locations of the defects in a spatial grid of the continuous sheet roll; and calculate a weighted centroid for the group of defects; and a display device that is configured to display: an individual representation indicative of a MD location and a cross direction (CD) location of a weighted centroid of the group of defects at a first zoom level; and a plurality of representations indicative of respective MD locations and CD locations each of the defects in the group of defects at a second zoom level that is higher than the first zoom level.

In some aspects, which may be used in conjunction with or as an alternative to other aspects herein, wherein: the computer device is configured to receive the data indicative of historical and real-time defects; and the display device is configured to transition between the first zoom level and the second zoom level responsive to a user input.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
FIG. 1A depicts a roll-to-roll sheet production system for continuous coating of a metal substrate with anodic or cathodic materials;
FIG. 1B depicts the calendaring process;
FIG. 2A is a plan view depicting a system for applying fiducial markings on a continuous moving sheet;
FIG. 2B is a plan view illustrating electrode fabrication employing fiducial markers to establish traceability of measurements by reading the fiducial markers on a continuous moving sheet and coordinating measurements using the marks;
FIG. 2C is a diagram showing the data and logic flow;
FIG. 3 is a schematic of a monitoring and control apparatus;
FIG. 4 illustrates an example method of intelligent defect grouping and visualization;
FIG. 5 illustrates another example method of intelligent defect grouping and visualization;
FIG. 6 illustrates an example defect map for intelligent defect grouping and visualization;
FIG. 7 illustrates an example of a magnified portion of a cluster in the defect map of FIG. 6
FIGS. 8A-8C illustrate examples of grid-based intelligent defect group and visualizations; and
FIGS. 9A-9B illustrate examples of distance-based intelligent defect group and visualizations.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

While various embodiments are described herein the in context of roll-to-roll lithium ion battery electrodes, the present disclosure is not so limited. For instance, the present disclosure is applicable to other discontinuous and continuous (e.g., paper making) manufacturing processes. An example of systems and various aspects generally associated with roll-to-roll lithium ion battery electrodes is described in U.S. Patent no. 18/144,657, titled: "Integrated Quality Monitoring View for Battery Manufacturing Process"; the entire contents of which is herein incorporated by reference.

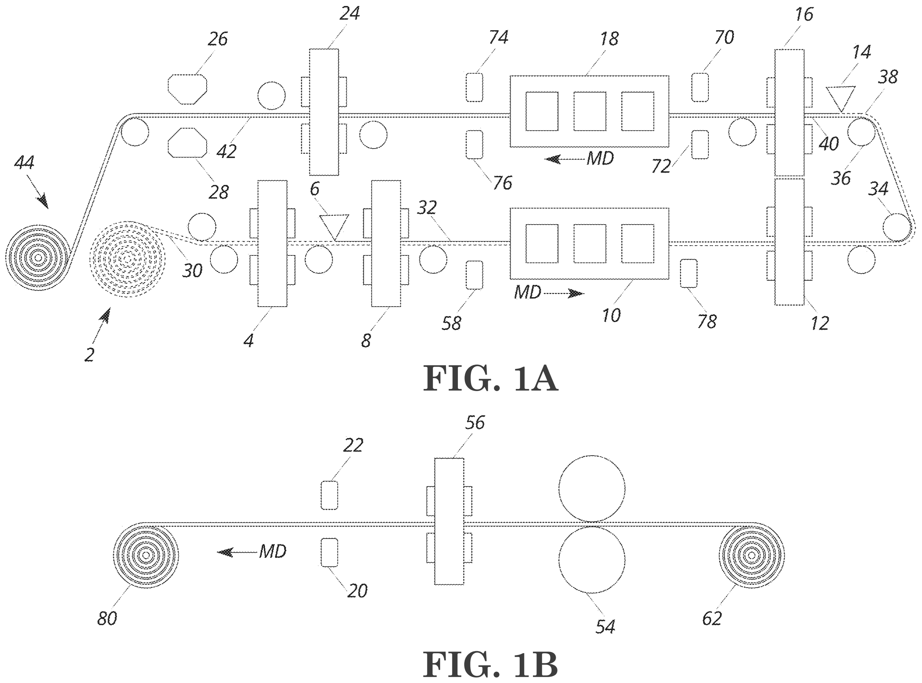

FIG. 1A illustrates a process for coating a metal web or sheet that is used in fabricating electrodes for lithium-ion electrochemical cells and batteries. For making anodes, the electrode coating includes anodic active materials such as graphite and, for making cathodes, the electrode coating includes cathodic active materials such as a lithium metal oxide. Electrodes include a current collector metal foil that is coated on both sides of the foil with electrode slurry which can also include carbon black, binder, and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material.

As shown in FIG. 1A, a roll 2 is unwound by an unwinder and supplies a continuous metal web or sheet 30 that is coated on a top surface with a layer of electrode slurry by a coater 6. The basis weight, thickness, and other characteristics of the metal web or sheet 30 from roll 2 are usually known; scanning beta gauges 4 and 8 are employed to measure, respectively, the basis weight and/or thickness before, and after, the electrode slurry is applied by the coater 6.

The coater 6, such as a tape casting coater, includes actuators that control a slot die/doctor blade to regulate the amount of slurry that is extruded onto the sheet 30. A dryer 10 removes excess solvents and cures the slurry that is on a moving coated sheet 32 to form an electrode layer on the sheet. Imaging devices 58 and 78 capture surface images of the coated sheet 32 before and after the dryer 10. Each imaging device typically includes a camera and a light source that illuminates the surface of the coated sheet 32. The imaging device may be stationary or scanning. For a stationary device, the camera takes digital images of the surface of the coated sheet 32 across an entire width. The camera generates a series of images that may be superimposed to form a continuous image of the entire coated sheet 32.

A scanning beta gauge 12 measures the basis weight and/or thickness of the moving coated sheet 32 exiting the dryer 10 after the calendar 54. Thereafter, rolling supports 34, 36 reverse the orientation of a moving sheet 38 so that the uncoated side is on top whereupon a coater 14 applies a layer of electrode slurry on the top uncoated surface of a moving sheet 38. The basis weight and/or thickness of a double-side coated sheet 40 are then measured with a scanning beta gauge 16 before entering a dryer 18. Imaging devices 70 and 72 capture top and bottom surface images of the sheet before the dryer 18 while imaging devices 74 and 76 capture top and bottom surface images of the sheet after exiting the dryer 18.

Further downstream, a beta gauge that is housed together with an infrared temperature sensor in a scanning device 24 measures the basis weight and/or thickness and the temperature of the double-coated sheet 42 as the scanning device 24 moves back and forth across the double-coated sheet 42. A rewinder takes up the double-side coated sheet 42 into roll 44. Surface defects on the top and bottom coatings are monitored by imaging devices 26, 28.

FIG. 1B, shows the calendaring process whereby the double-coated electrode layer from roll 62 passes through a calendar 54 which finishes and smooths the electrode layer. The basis weight and/or thickness of a double-side coated sheet are then measured with a scanning beta gauge 56 and imaging devices 22 and 20 captures the top and bottom surface images before being collected in roll 80. The scanners and cameras are part of the quality control system (QCS).

For monitoring the double-side coated sheet 42 with the present invention, thermographic image data of the coated sheet 42 is correlated and corrected with the online basis weight and/or thickness measurements of the coated sheet 42 to generate more accurate basis weight and/or thickness calculations across the coated current collector along its entire cross direction (CD).

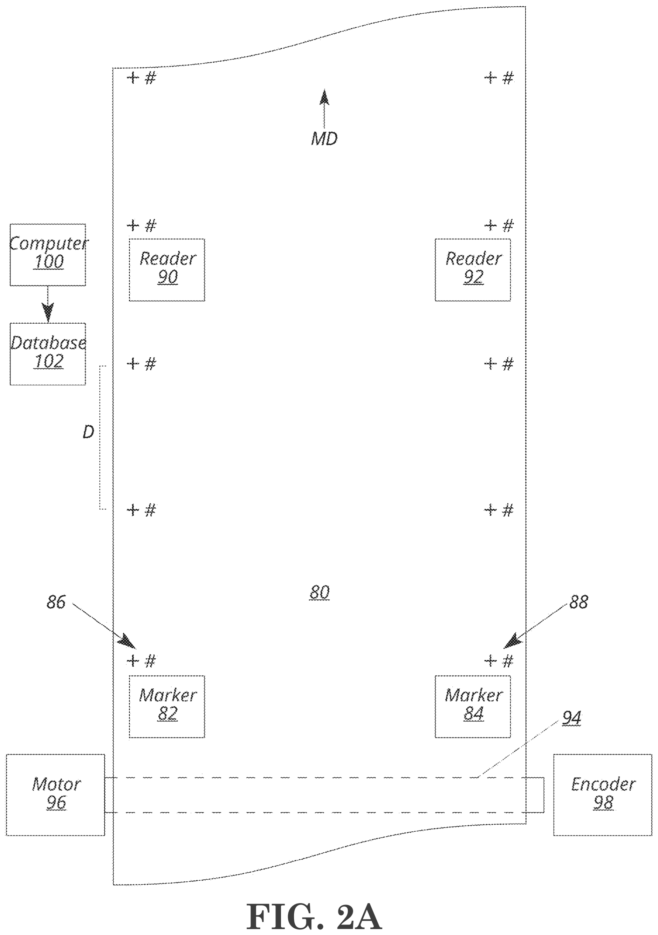

During production as shown in FIGS. 1A and 1B, the continuous sheet 30 can be marked to identify its position along the MD. For instance, reference marks or markings and associated tracing codes (collectively referred to as "fiducial markers") serve as reference points along the MD. FIG. 2A shows a system for applying a series of fiducial markers that include reference marks or markings and associated tracing codes onto a moving sheet of material 80. Stationary marker device 82 is positioned over the sheet to apply a series of fiducial markers 86 along one edge of the moving sheet while stationary marker device 84 is positioned over the sheet to apply another series of fiducial markers 88 along an opposite edge of the moving sheet. Each series of fiducial markers is aligned along the MD. In the event the sheet is slit along the MD, each series of fiducial markers may be employed separately. The reference mark or marking is configured as a horizontal line that is perpendicular to the MD and a vertical line that is parallel to the MD. A preferred configuration of the reference mark is a cross-shaped or plus "+" sign. Successive horizontal elements or components of the reference marks may be separated by a distance D. The vertical elements or components of the reference mark may be formed a specific known distance from the adjacent sheet edge. The tracing code uniquely identifies each associated reference mark 82, 84. The sheet 80 is supported and transported by a roller 94 whose speed is monitored by an encoder 98. The marker devices may be any suitable device that generates sufficiently permanent marks on the metal substrate and/or coating. For example, a laser may be used to mark metal while an inkjet printer may be used to mark paper, plastic, and fabric.

In operation, a computer 100 (i.e., a computer devices) regulates a motor 96 to control the MD speed. A computer that includes a processor and storage (memory) such as a laptop computer may be used. The markers 82 and 84 each periodically mark an uncoated, or coated, area of the sheet with the fiducial markers which are tracked to a time or a roll encoder measurement generated by encoder 98. The code from the encoder 98 may be, for example, an encoder count, millisecond time, or a number, or computer readable code, which is associated with such quantities. The code is stored in a database 102. The codes are unique so they cannot be duplicated. As further described herein, readers 90, 92, such as optical character recognition detectors, scan the fiducial markers 82, 84. It is understood that the fiducial markers 82, 84 may be applied to any part of the moving sheet 80 including the uncoated and/or coated areas.

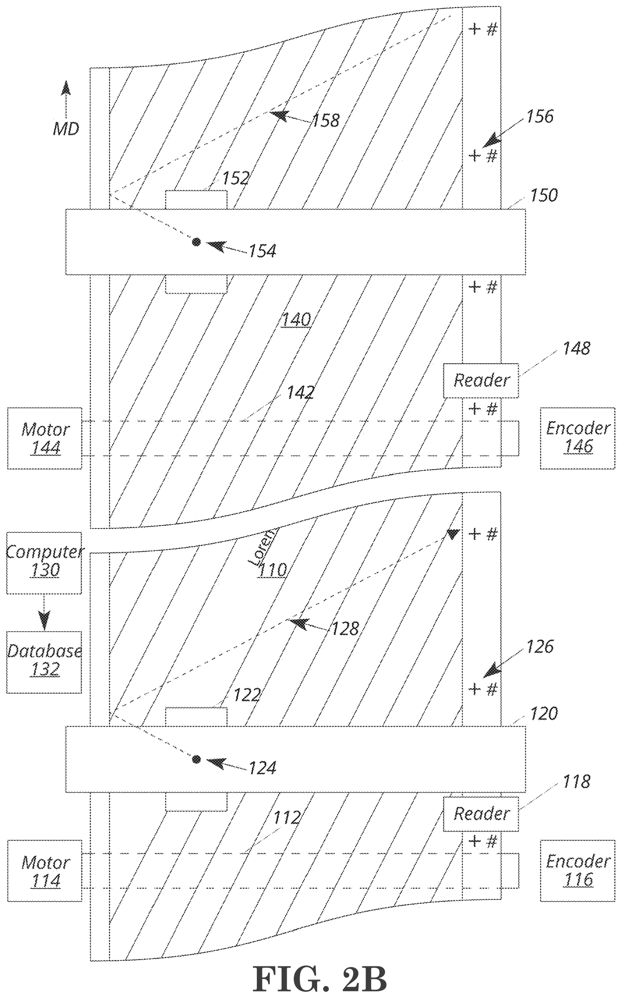

FIG. 2B illustrates the use of the fiducial markers 82, 84 in tracking different measurements of electrode layer(s) on a moving sheet. Electrode layer 110 is coated on a moving metal substrate that is supported and transported in the MD by roller 112 which is operated by motor 114. Encoder 116 monitors the speed of roller 112. Reader 118 recognizes fiducial marker characters 126 on the uncoated side of the moving sheet. Frame 120 supports scanning device 122 that includes a gauge which measures the basis weight and/or thickness of the coated sheet. The scanning device periodically traverses coated sheet 110 generally at a constant speed. The gauge is shown measuring a spot or area 124 of the coated sheet 110. Because of the sheet velocity, the scanning device travels diagonally across the coated sheet surface, with the result that consecutive scanning paths have a zig-zag pattern with respect to a direction perpendicular to the longitudinal edges of coated sheet 110. An example of such a zig-zag pattern is scanning path 128 which would be traced by the gauge as the scanning device 122 traverses the surface of sheet during back-and-forth consecutive scans. The angles of the scanning path relative to the true CD depend upon the cross directional (CD) velocity of the scanning device and upon the machine directional (MD) velocity of the coated sheet 110 which is known. The zig-zag pattern of interrogation spots covers a relatively small portion of the coated sheet 110 surface.

Computer 130 coordinates the measurements by scanning device 122 so that the locations of interrogation spots in pattern 128 are recorded in database 132 along with the corresponding fiducial markers. In this fashion, the measurements made on each electrode are known.

Another feature is that the fiducial markers may be employed to synchronize subsequent measurements to prior measurements. For example, coated sheet 110 of FIG. 2B after being measured by sensor 122 can be removed to another line for further processing such as for drying or calendaring. Thereafter, the so-treated coated sheet 140 is formed and is subject to a second measurement. Sheet movement is supported on a roller 142 and a frame 150 secures a second scanner device 152. Computer 130 controls motor 144, encoder 146 and scanner device 152 so as to synchronize second measurements by scanner device 152 with the first measurements executed downstream by scanner device 122. Reader 148 detects the fiducial marker 156 and scanning device 152 can be reset to commence measurements at interrogation spot 154 so that the interrogation spots in pattern 158 coincide with those in zig-zag pattern.

If scanners 122 and 152 are well-aligned such that the coated sheet edges are measured at the same scanner bins on both scanners, when scanner 122 was at a first scanner position along the CD and detects a specific fiducial marker, then when scanner 152 detects the same specific fiducial marker, the scanner 152 should also be at the same first scanner position along the CD. However, in practice, even if scanners are well aligned, the moving coated sheet can wander from side-to-side in the CD and therefore it is necessary to adjust operations to account for this motion by using edge detection. The edge of the moving sheet can be designated as being detected at a specific fiducial marker xxx+number of encoder counts. In particular, the computer will receive a signal when one of the fiducial markers is read. However, these can be far apart so in order to monitor the sheet between successive fiducial markers, encoder signals can be used. In particular, the encoder sends pulses at much higher rates so computer can interpolate positions between fiducial markers using the pulses. The same would apply to the next scanner in the process.

As the second measurements by scanning device 152 are made, the locations of the interrogation spots in pattern 158 are recorded in database 132 along with the corresponding fiducial markers. The database thus has a library of first and second measurements that were made on essentially the same interrogation spots.

The present invention permits real time monitoring of the sheet production process. The display may be run on a PC, laptop computer, tablet computer, smartphone, or other portable or mobile or handheld device.

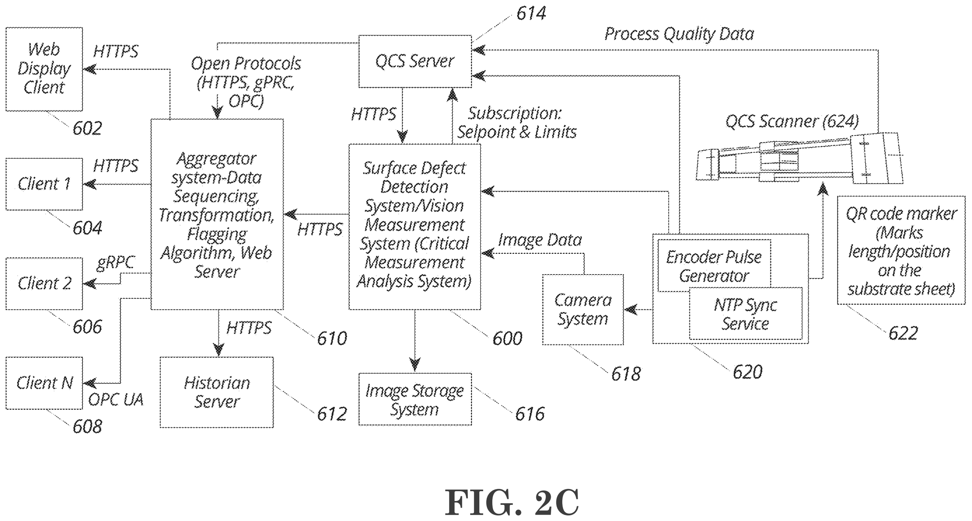

FIG. 2C shows a system for generating process quality data from on-line measurements in a continuous electrode manufacturing plant. The system includes various scanners 624 and cameras 618, QCS server 614, surface defect detection system and vision measurement system 600, aggregator node 610, and encode pulse generator and network time protocol synchronization service 620.

A laser etcher/marker is used to mark the edge of an electrode substrate surface at pre-configured regular length intervals with an identifier such that the identifier is present in every frame captured by the camera system. This identifier can be used to identify a length of the substrate/material currently being inspected. The identifier can be a bar code, QR code or any other numerical/alphanumeric ID 622 understood by various systems in the solution.

All data generated from the various systems (camera system, surface defects detection system, vision measurement system and QCS server) is tagged with an encoder pulse and time stamp 620 for synchronization in a data aggregator node which combines data from various sources for calculating product quality disposition at the unit level (cathode, anode etc.).

Coated substrate/material images are streamed from a camera system 618 to a surface defect detection system and critical measurement analysis system 600. The surface defect detection system is configured to analyze the image data to detect surface defects such as but not limited to edge void, coating spot, and coating void. In addition, it classifies defects in pre-defined categories and tags data with metadata for further processing. Based on configuration, it saves exception (data with issues only)/full image data in a designated network location 616.

The critical measurement analysis system (vision measurement system) is configured to analyze the image data to detect critical measurement issues such as but not limited to substrate edge to edge coating, and coated and uncoated region width. In addition, it subscribes to setpoints, limits and other metadata from QCS server 614 to effectively run algorithms against setpoints, process limits etc. from the currently selected product recipe. Based on configuration, it saves exception (data with issues only)/full image data in a designated network location.

The aggregator node 610 is configured to sequence the data based on time, encoder pulse and to transforms the data as required. It combines data from surface defects detection system vision measurement system 600 and QCS server 614. It also combines data to detect data patterns to identify scenarios such as cyclic defects, cluster of defects e.g., as described herein, and flag them for operators to easily mark/tag/comment the defective material for downstream operations to take appropriate action. Based on configuration, it can historize exception (data with issues only)/full data with signals to historian server 612. In addition, the aggregator node 610 serves the data in diligently designed user-friendly views for monitoring, analysis and reporting for operator effectiveness and calculates overall quality disposition of the product based on analysis of aggregated and synchronized data. An application programming interface (API) exposes aggregated defect data and/or quality outcome to connected clients 602, 604, 606, 608 using open protocols.

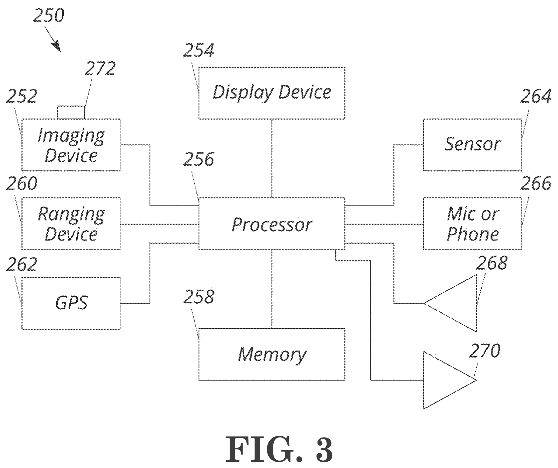

FIG. 3 is an embodiment of a display monitoring apparatus 250 that includes an imaging device 252 that is equipped with lens 272, a display device 254 (e.g., a monitor), a processor 256, and a memory 258. In the case of monitoring a lithium ion battery production, metal substrate and electrode quality measurement information is stored in the memory 258.

Suitable imaging device 252 includes a digital camera and a video camera that captures video in a frame-by-frame manner. Apparatus 250 may also include a ranging device 260 which is configured to determine a distance from ranging device 260 to a sheet and other surfaces and a global positioning system receiver (GPS) 262 which is configured to determine a position of system 250. The apparatus 250 may include a sensor 264 for recognizing actions by an operator and a microphone 266 for capturing voice commands or inputs from an operator. The processor 256 may be configured for speech recognition and gesture detection so that hand or finger gestures by the operator are identified as user commands to operate apparatus 250.

Finally, apparatus 250 can include a receiver 268 for receiving data from a quality control system of a manufacturing plant and a transmitter 270 for transmitting data to the quality control system. For instance, during battery production, various scanners are employed to measure paper quality. The measurements may be transmitted to apparatus 250 and stored in memory 258. The apparatus 250 may be a portable device that is equipped with cameras, such as tablets and smartphones, that may be modified and programmed.

Illustrative defect maps displaying integrated quality monitoring views of the present invention are shown in the following figures. The defect maps are based on an electrode production process wherein the coated electrode has 250 points or bins across the width; each bin represents a distance of about 5 mm.

As detailed herein, the present disclosure provides an intelligent defect grouping and visualization system that employs spatial proximity or grid mapping to intelligently group and display defects across long sheet lengths while maintaining critical defect visibility. This intelligent grouping yields various benefits over simple detection or less sophisticated attempts to cluster defects (e.g., those that do not employ a centroid based representation of a cluster of defects, do not employ grid-based defect groupings, etc.). For instance, traditional systems show all defects individually, leading to cognitive overload when viewing long sheet lengths (e.g., 500 meters in the machine direction). Moreover, some previous simplistic defect combining or grouping approaches may lose severity information, while the weighted centroids herein preserve critical defect prominence within the group of defects. Moreover, the approaches herein permit effective visualization even when pixel-to-millimeter ratio would otherwise prevent showing specific representations of each individual defect (e.g., two individual defects located 2 mm apart on a sheet roll that has a 500 meter length, etc.). Additionally the approaches herein permit operators to seamlessly transition between wide-angle views showing the entire e.g., 500 meters, etc. meter sheet length and detailed zoomed views of specific defects, with distinct iconography differentiating top side and bottom side defects (e.g., which can be displayed concurrently in the same screen to permit an operator to readily identify clusters of defects on either side of a roll). In view of the above, the systems and methods herein enhance the operator's situational awareness and efficiency while reducing cognitive workload. For instance, the systems and methods herein permit the operator to adjust the level of detail and the grouping criteria according to the application and preference. Stated differently, the systems and methods herein yield technical benefits such as improving the accuracy of the sheet quality analysis process by representing each defect uniquely located by spatial coordinates such as machine direction and cross direction positions, reducing the waste and rework costs, increasing the product quality, etc.

In some embodiments, the systems and methods herein grouping the defects into a group of defects using a spatial grid approach. For instance, such approaches can use a spatial grid (e.g., that has been previously calculated for a given set of display screen dimensions, an aspect ratio of the display screen, a resolution of the display screen and/or any combination thereof) . The grid can be determined by identifying or receiving information indicative of a resolution of a monitor (e.g., which is configured to display the clustered defects herein), dimensions of the monitor (e.g., a diagonal size of the monitor such as 24 inch monitor), an aspect ratio (e.g., 16:9) of the monitor and/or any combination thereof. Examples of monitor resolution include 4K, 2K, or Full HD (1080p) monitor resolutions. Dimensions of other parameters of the monitor can be automatically detected (e.g., based on data received from the monitor) or can be provided via an input (e.g., an input from an operator, system administrator, etc.).

Additionally, the spatial grid (i.e., grid) can be determined by finding a dimensions of a display screen. The dimensions include a length (L) and a width (W) of the display screen. The dimension can be automatically detected (e.g., based on data received from one or more cameras or sensors described herein), calculated, or can be provided via an input (e.g., an input from an operator, system administrator, etc.). For instance, the width and height can be calculated in accordance with the following equations for 16:9 aspect ratio:
$Width = Diagonal Screen Size \times 16 / \left\{sqrt\left\{{16}^{∧}2+{9}^{∧}2\right\}\right\} ;$ and
$Height = Diagonal Screen Size \times 9 / \left\{sqrt\left\{{16}^{∧}2+{9}^{∧}2\right\}\right\} .$

In some embodiments, a total quantity of grid cells can be equal to a total quantity of horizontal grid cells times a total quantity of vertical grid cells. The total quantity of horizontal grid cells and the total quantity of vertical grid cells can each be calculated as described herein. In some embodiments, the methods and systems herein can calculate the quantity of grid cells based on the following equations: $Horizontal cell count = f \left(W, HZ, MGS\right) = \left(W\times \left(HZ/100\right)\right) / MGS$ $Vertical cell count = f \left(H, VZ, MGS\right) = \left(H\times \left(VZ/100\right)\right) / MGS ; and$ 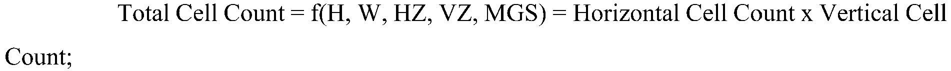 Total Cell Count = f(H, W, HZ, VZ, MGS) = Horizontal Cell Count x Vertical Cell Count; wherein "H" is a vertical height a screen, "W" is a horizontal width of the screen, "HZ" is a horizontal zoom within the application display (e.g., a defect mapping application), "VZ" is a vertical zoom within the application display, and "MGS" is a minimum grid cell size (e.g., a minimum vertical height and a minimum horizontal with of a square-shaped grid cell. For instance, in some embodiments, a higher screen resolution (and/or larger screen size) can correspond to a higher number of grid cells.

In some embodiments, as the size of the screen changes (increases or decreases), the minimum cell size can be adjusted to control the count of the grid cells to view the defects distinctly or group more defects, by default.

In some embodiments, each of the grid cells can be the same size (e.g., have the same shape and same dimensions). In some embodiments, the individual grid cells can be rectangular or square shaped grid cells. In some embodiments, the quantity of grid cells can be in a range from about 2000 to about 6000 grid cells (e.g., 2442 grid cells or 4312 grid cells, among other possible values), among other possible values. In some embodiments, the size of the individual grid cells can be in a range from 5 millimeters to 10 millimeters (e.g., 8 millimeters), among other possible values.

In some embodiments, the length and width of the grid (e.g., of all the grid cells combined) can be proportional to a length and width of the entire sheet roll or to a portion of the sheet roll. For instance, a ratio of the dimensions of the grid to the dimensions of the entire sheet roll can be 1:10, 1:20, 1:30, 1:50, 1:100, 1:200, 1:300, 1:400, 1:500; 1:1000, 1:2000, among other possible values.

The grid can be overlaid on a defect map (e.g., which is produced from the defect data from a plurality of sources). All defects located within an individual grid cell can be grouped together (e.g., as a group of defects). For instance, all defects falling within a single grid cell of a plurality of grid cells the comprise the grid can be automatically grouped together.

In some embodiments, the systems and methods herein can identify and assign an edge defect to a particular grid cell. Edge defects are located in two or more grid cells (e.g., located on a boundary between two or more grid cells) can be grouped with defects in one of the grid cells. The systems and methods herein can automatically handle edge cases. For example, for defects that fall on grid cell boundaries, the system identify the defect's position relative to cell edges (e.g., whether or not the defect is located on a grid boundary). If the defect is located on the grid boundary the systems herein can calculate distances (e.g., Euclidean distances, as described herein) from the edge defect to nearby defects in adjacent grid cells that are immediately adjacent to the boundary the edge defect is located on. The edge defect can be assigned to and potentially clustered with defects in an adjacent grid cell that are most proximate to the location of the edge defect. This prevents artificial separation of related defects that happen to fall across grid boundaries. This approach ensures logical grouping is maintained while avoiding arbitrary separation of defects that may be physically close but fall into different adjacent grid cells. The edge case handling is particularly important when dealing with high defect densities near grid boundaries or when the grid size changes due to display resolution adjustments (e.g., responsive to an operator or other individual zooming in or out).

The defects can be grouped based on locations in the spatial grid. For example, all defects in an individual grid cell can be grouped (i.e., clustered) together. However, in some embodiments a subset of all of the defects in an individual grid cell can be grouped together (e.g., based on a spatial proximity within the grid cell, based on a type of defect, based on a side of the sheet roll of the defect, and/or based on a severity of the defect, etc.).

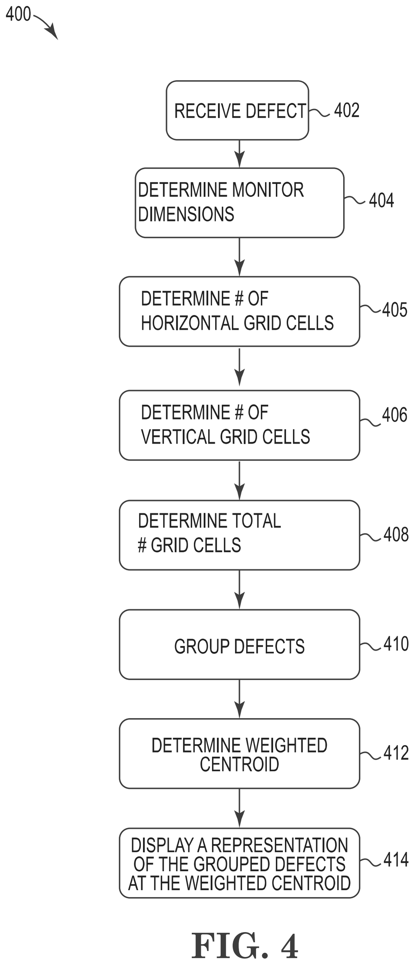

FIG. 4 illustrates an example method 400 of intelligent defect grouping and visualization. At 402, the method 400 can include receipt of information indicative of a plurality of defects. The information can be received at one or more components described herein such as the surface defect visualization detection system 600, among other possible components. The information can come from a plurality of sensors such as a QCS scanner and/or the camera systems described herein.

At 404, the method 400 can include determining dimensions of a monitor, as described herein. The method 400 can further include determining include determining a quantity of grid cells. For instance, at 405 the method can include determining a quantity (count) of horizontal grid cells. The quantity (count) of horizontal grid cells can be based on the determined monitor dimensions (e.g., the monitor width and monitor height), a zoom level (e.g., a vertical zoom level), and a predefined minimum grid cell size, as described herein. Similarly, at 406 the method 400 can include determining a quantity (count) of vertical grid cells. The quantity (count) of vertical grid cells can be based on the determined monitor dimensions (e.g., the monitor width and monitor height), a zoom level (e.g., a vertical zoom level), and a predefined minimum grid cell size, as described herein. At 408 the method 400 can include determining a total quantity of grid cells (e.g., which are the same shape and size), as described herein. For instance, the total quantity of grid cells can be determined by multiplying the quantity of horizontal grid cells (as determined at 405) by the quantity of vertical grid cells (as determined at 406) to yield the total quantity of grid cells.

As a non-limiting example, to calculate the number of grid cells for full HD screens (1920x1080 resolution) with a diagonal sizes of 24 inches and 32 inches, and a minimum grid cell size of 8mm, follow these steps:

Step 1: Convert diagonal size to physical dimensions

Assuming the aspect ratio is 16:9, so we can calculate the width and height of the screen in inches using the formula:
$Width = Diagonal \times 16 / \left\{sqrt\left\{{16}^{∧}2+{9}^{∧}2\right\}\right\}$
$Height = Diagonal \times 9 / \left\{sqrt\left\{{16}^{∧}2+{9}^{∧}2\right\}\right\}$

The diagonal size is given in inches, so we calculate for both 24 inches and 32 inches:
For 24 inches:
   $Width = 24 \times 16 / \left\{sqrt\left\{{16}^{∧}2+{9}^{∧}2\right\}\right\} = approximately 20.92 inches$
   $Height = 24 \times 9 / \left\{sqrt\left\{{16}^{∧}2+{9}^{∧}2\right\}\right\} = approximately 11.77 inches$
For 32 inches:
   $Width = 32 \times 16 / \left\{sqrt\left\{{16}^{∧}2+{9}^{∧}2\right\}\right\} = approximately 27.89 inches$
   $Height = 32 \times 9 / \left\{sqrt\left\{{16}^{∧}2+{9}^{∧}2\right\}\right\} = approximately 15.69 inches$
Step 2: Convert inches to millimeters
1 inch = 25.4 mm. So:
For 24 inches:
   $Width = 20.92 \times 25.4 = approximately 531.37 mm$
$Height = 11.77 \times 25.4 = approximately 299.18 mm$
For 32 inches:
   $Width = 27.89 \times 25.4 = approximately 708.49 mm$
   $Height = 15.69 \times 25.4 = approximately 398.91 mm$
Step 3: Calculate the number of grid cells

If the minimum grid cell size is 8mm and horizontal and vertical zoom level is 100%. To find the number of grid cells, divide the width and height by the grid cell size:
For 24 inches: 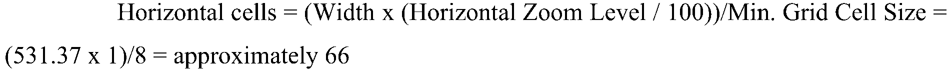 Horizontal cells = (Width x (Horizontal Zoom Level / 100))/Min. Grid Cell Size = (531.37 x 1)/8 = approximately 66 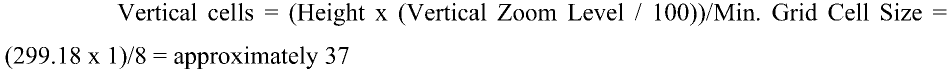 Vertical cells = (Height x (Vertical Zoom Level / 100))/Min. Grid Cell Size = (299.18 x 1)/8 = approximately 37
$Total cells = Horizontal Cells \times Vertical Cells = 66 \times 37 = 2442$
For 32 inches: 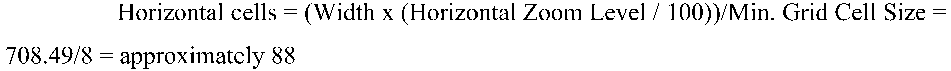 Horizontal cells = (Width x (Horizontal Zoom Level / 100))/Min. Grid Cell Size = 708.49/8 = approximately 88 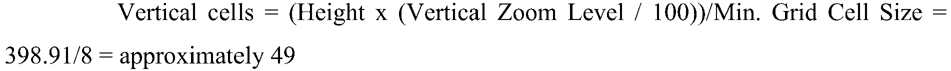 Vertical cells = (Height x (Vertical Zoom Level / 100))/Min. Grid Cell Size = 398.91/8 = approximately 49
$Total cells = Horizontal Cells \times Vertical Cells = 88 \times 49 = 4312$
Results:
For a 24-inch screen: 66 x 37 grid cells = 2442 cells; and
For a 32-inch screen: 88 x 49 grid cells = 4312 cells.

While the above example utilizes particular dimensions (e.g., 24-inch screen and 32-inch screen etc.) and values, these are merely examples and other dimensions or values may be employed.

At 410, the method 400 can include grouping the defects. For instance, each defect within a grid cell can be grouped together. Additionally, an edge defect which is located on the border between two or more grid cells can be grouped with one or more defects in an adjacent grid cell, as described herein.

At 412, the method 400 can include calculating a centroid of the grouped defects, as described herein. That is, each group of defects can have an individual corresponding centroid (e.g., a weighted centroid), as described herein.

At 414, the method 400 can include displaying a representation of the grouped defects at the weighted centroid. As mentioned, the representation can be an individual icon indicative of a location on the side of the sheet roll, a type of the defects, a severity (e.g., average severity, minimum severity, or maximum severity) of the grouped defects, defect density within the group of defects; or any combination thereof. For example, in some embodiments a first representation indicative of a first group of defects on a first side of the continuous sheet roll can be displayed and a second representation, that is different than the first representation, indicative of a second group of defects on a second side of the continuous sheet roll can be displayed. For example, the representation of the defects can be provided as a first type of icon (e.g., a solid icon) for top surface defects and a second type of icon (e.g., a hollow icon) for bottom surface defects. That is, the first representation is indicative of a MD and a cross direction (CD) location of the weighted centroid on the first side of the continuous sheet roll (e.g., wherein the CD is perpendicular to the MD); and the second representation is indicative of a MD and a CD location of the weighted centroid on the second side of the continuous sheet roll. Hence, representations of groups of top and bottom surfaces defects can be readily displayed (e.g., concurrently), in contrast to other approaches that are limited to displaying defects on only a top or bottom side of a sheet to an operator at a given time. Similarly, the icons can also display an indicator of the defect type and/or defect severity for each of the plurality of groups of icons.

While the defects may be grouped using a grid based approach such as those described with respect to FIG. 4, the present disclosure is not so limited. Rather, in some embodiments the defects may be grouped together based on defect proximity. For example two or more defects that are within a threshold distance (e.g., 1 millimeter, 2 millimeters, 3 millimeters, 4 millimeters, etc.) of each other may be grouped together (e.g., in the absence of a grid). For instance, defects that are spaced a distance (e.g., a Euclidian distance) apart are less than or equal to the threshold distance apart may be grouped together. The threshold distance may be a predetermined distance or may be specified by an individual (e.g., specified based on an input from an operator, etc.). In some embodiments, the defects may be grouped based on Euclidean distances between defect centers and/or pixels in which representations of the respective defects are located. For example, the Euclidean distance between defects may be determined in accordance with equation 2, below. $d = √ \left({\left(x2-x1\right)}^{2}+{\left(y2-y1\right)}^{2}\right)$ (Equation2); where:
"d" is the distance between two defects on the same side of the sheet roll;
"x1", "y1" are cross direction and machine direction positions of a first defect (e.g., as taken at a center point of the first defect) on the sheet roll; and
"x2", "y2" are cross direction and machine direction positions of a second defect (e.g., as taken at a center point of the second defect) on the sheet roll.

The systems and methods herein can calculate a centroid of the group of defects (e.g., defects grouped based on a location in a grid or that are grouped together based on a distance between the defects). The centroid can be calculated based on the spatial positioning of the defects. That is, the centroid can be determined based on the respective machine direction and cross direction positions of the defects in the group of defects.

In some embodiments, the centroid can be a weighted centroid. Each defect can have a respective weight. The location of the centroid can be based on respective defect weights of the defects from which the location is calculated. For example, the centroid can be based on a respective weights (e.g., severity weights) of each of the defects in a group of defects. For instance, the location of the weighted centroid can be determined based on Equation 3, below. 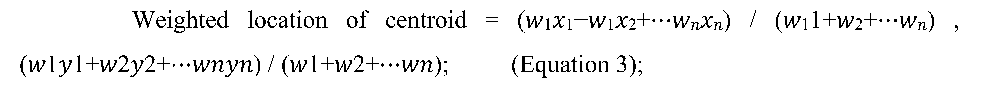 Weighted location of centroid = (w1x1+w1x2+···wnxn) / (w11+w2+···wn) , (w1y1+w2y2+···wnyn) / (w1+w2+···wn); (Equation 3); where:
"w₁", "w₂", ..., "wₙ" represent individual defect weights (e.g., weights indicating the individual defect severities);
"x₁", "x₂", ..., "xₙ" are cross direction positions of respective defect (e.g., as taken at a center point of a defect) on the sheet roll; and
"y₁", "y₂", ..., "yₙ" are machine direction positions of respective defects (e.g., as taken at a center point of the defect) on the sheet roll.

In some embodiments, the defect weights can be severity weights that are indicative of a particular severity of an individual defect. The severities weights of the individual defects can be determined based on a location, type, shape, and/or size (e.g., depth) of a defect. For instance, a small hole or bubble may have a low numerical severity weight, whereas a large hole or bubble may have a high or critical numerical weight associated therewith. The weights can be automatically assigned and associated with the defects by the systems herein, e.g., based on one or more thresholds (e.g., size, depth, type, etc.) thresholds. The weights can be associated with the defects in real-time (e.g., responsive to detection of the defects).

As indicated above in Equation 3, the numerator sums the product of the weights and their corresponding coordinates, while the denominator sums the weights. This results in the average position of the defects weighted by their severities, providing a more accurate representation of the clustered defect's location and significance. This approach ensures that more severe defects have a greater influence on the position of the unique defect, which helps prioritize areas that require immediate attention. Consequently, the spatial proximity technique streamlines defect management, allowing for more efficient and effective maintenance processes.

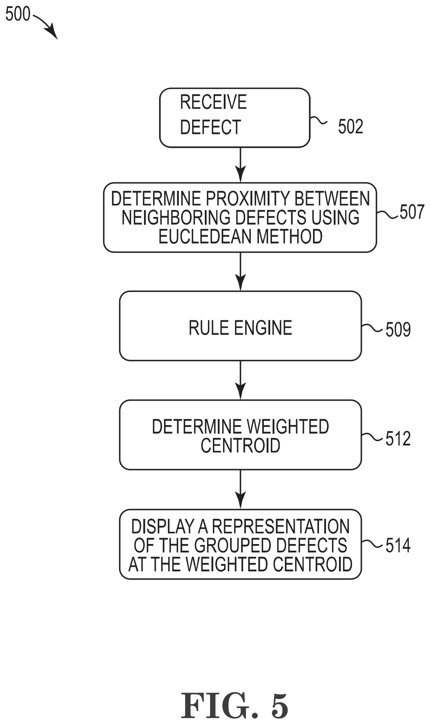

FIG. 5 illustrates another example method of intelligent defect grouping and visualization. At 502, the method 500 can include receipt of information indicative of a plurality of defects. As mentioned, the information can be received at one or more components described herein such as the surface defect visualization detection system 600, among other possible components. The information can come from a plurality of sensors such as a QCS scanner and/or the camera systems described herein.

At 507, the method 500 can include determining distances between defects. For instance the method 500 can include determining the Euclidian distances between the defects, as described herein. At 509, the method 500 can utilize a rules engine to determine one or more criteria for grouping defects based on proximity measurements. Specifically, the rule engine can take the calculated Euclidean distances between defects as input and apply one or more configurable threshold values to determine when defects should be grouped together. For instance, the rules engine can be utilized to make decision about whether defects are "too close" (e.g., to close together to be represented as individual defects based on a screen resolution of a given monitor). If the defects are determined to be too close together (e.g., are less than a threshold distance apart) then the defects should be grouped together. The output grouping decisions can then be fed into the weighted centroid calculations. Hence, the rules engine acts as the decision-making component that evaluates the spatial relationships between defects and determines whether they should be grouped, e.g., using operator-configurable criteria to maintain clarity while preventing cognitive overload.

At 512, the method 500 can include calculating a centroid of the group of defects, as described herein. That is, each group of defects can have an individual corresponding centroid (e.g., a weighted centroid), as described herein.

At 514, the method 500 can include displaying a representation of the group of defects at the weighted centroid. As mentioned, the representation can be an individual icon indicative of: whether the defect is an individual defect or a group of defects (e.g., which have been grouped together using the methodologies described herein), a location on the side of the sheet roll, a type of the defects, a severity (e.g., average severity, minimum severity, or maximum severity) of the defect, defect density within a group of defects, or any combination thereof. In some embodiments a first representation indicative of a defect being an individual defect can be displayed and a second representation, that is different than the first representation, indicative of a group of defects on the continuous sheet roll can be displayed. For example, the representation of the defects can be provided as a first type of icon (e.g., a hollow icon) for individual defects and a second type of icon (e.g., a solid icon) for a group of defects that have been grouped together, as described herein. That is, individual defect icons and the group of defects icon can be readily displayed (e.g., concurrently), in contrast to other approaches that are limited to displaying individual defects at a given time.

Similarly, in some embodiments a first representation indicative of a first group of defects on a first side the continuous sheet roll can be displayed and a second representation, that is different than the first representation, indicative of a second group of defects on a second side of the continuous sheet roll can be displayed. For example, the representation of the defects can be provided as a first type of icon (e.g., a solid icon) for top side defects and a second type of icon (e.g., a hollow icon) for bottom side defects. That is, groups of top and bottom side defects can be readily displayed (e.g., concurrently), in contrast to other approaches that are limited to displaying defects on only a top or bottom side of a sheet to an operator at a given time. Similarly, the icons can also display an indicator of the defect type and/or defect severity, among other characteristics associated with the detected defects.

Additional examples of representations of defects are described in described in U.S. Patent no. 18/144,657, titled: "Integrated Quality Monitoring View for Battery Manufacturing Process"; the entire contents of which is herein incorporated by reference.

In various embodiments, the systems and methods herein can display a representation of the group of defects as an individual icon located at the positioned calculated for the weighted centroid of the defects. The representation of the group of defects can by sized, shaped, colored, and/or include numbers or text, etc. that are indicative of one or more characteristics of the defects in the group. Characteristics of the defects include which side of the sheet roll the group of defects are located, a location on the side of the sheet roll, a type of the defects, a severity of the group of defects, or any combination thereof. Hence the systems and methods herein can render a display with group of defects using appropriate iconography for differentiation between defect types, etc. Thus, the systems and methods herein can automatically adapts to different display resolutions and sheet dimensions while maintaining logical defect grouping and visualization clarity based on display resolution constraints, a current zoom level, a defect proximity and/or location in a grid, and/or defect severity.

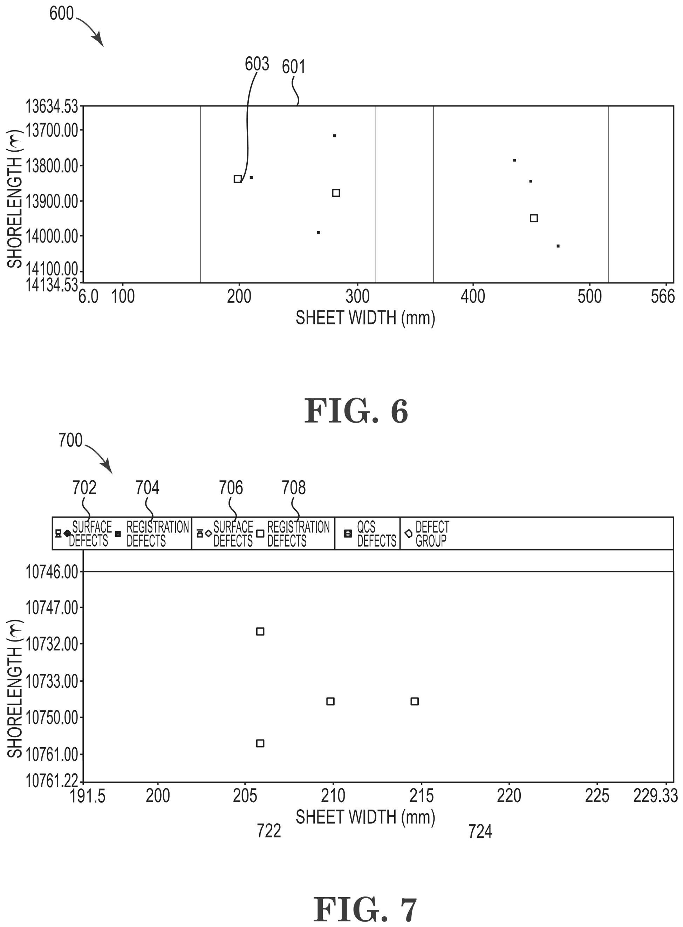

A monitor screen 600 illustrating a defect map 601 of the present invention is shown in FIG.6. FIG. 6 shows a wide-angle view interface displaying defects and group of defects 603 across the sheet width. The interface displays multiple defect indicators at different machine direction (MD) and cross direction (CD) positions, with measurements shown along both axes. The display includes surface defects represented by distinct icons, registration defects shown with different iconography, weight defects indicated by specific markers, defect groups shown as combined indicators, sheet width measurements (mm) on the horizontal axis, and machine direction measurements on the vertical axis.

The figure demonstrates how the system provides a comprehensive view of the entire sheet length while using intelligent grouping to maintain visibility of defects across the extended viewing area. The interface allows operators to monitor defects across long sheet lengths (e.g., 500 meters) while maintaining the ability to distinguish between different defect types and their locations. The visualization uses distinct iconography to differentiate between defect types and sources, with solid icons representing top surface defects and hollow icons representing bottom surface defects. This comprehensive view enables operators to quickly identify areas with higher defect density and make informed quality control decisions

FIG. 7 illustrates an example of a magnified portion (e.g., the area including the group of defects 603 from the defect map of FIG. 6). That is, FIG. 7 shows a zoomed-in detail view of the interface demonstrating how individual defects within a group can be examined (e.g., by an operator). The interface in FIG. 7 is configured to display surface defects (e.g., display both solid top surface defect icons 702, 704 and hollow bottom surface defect icons, 706, 708), registration defects, weight defects, and defect groups. The view in FIG. 7 shows defects across a narrower sheet width range (approximately 195-230 mm) compared to the wide-angle view of FIG. 6, allowing operators to see individual defects in detail rather than an individual grouped representation of the defects. The interface includes a legend at the top showing different defect types and their corresponding iconography. The zoomed view of FIG. 7 can permit an individual such as an operator to selectively examine specific defects of a group of defects in detail, distinguish between different defect types, view both top and bottom surface defects simultaneously, and/or analyze defect patterns in a specific area of interest in the sheet roll, among other possibilities. For instance, the systems and methods herein can display an individual representation indicative of a machine direction (MD) location and a cross direction (CD) location of a weighted centroid of the group of defects at a first zoom level, as illustrated in FIG. 6, and can display a plurality of representations indicative of respective MD locations and CD locations each of the defects in the group of defects at a second zoom level that is higher than the first zoom level, as indicated in FIG. 7. Hence, zooming in on the displayed representation of group of defects causes display of representations of each of the individual defects in the group of defects.

Thus, FIGS. 6-7 illustrate that the systems and methods herein can maintain individual defect identity and characteristics even when defects are grouped in the wider view, allowing detailed inspection when operators need to examine specific areas more closely and thereby promoting taking corrective actions to remediate defects and thereby enhance yields and/or quality of end products. Alternatively or in addition, the intelligent identification and visualization of defects herein can promote grading or evaluating a manufactured material (e.g., sheet roll of lithium ion batteries) and thereby promote inclusion of the particular grade of manufactured material into a suitable product and/or appropriate sale of the manufacture material.

In some embodiments, the monitor screens herein can display various filters, defect details (e.g., types, locations, size, quantities, etc.), defect maps, grid, mappings of defects to columns on the sheet roll, roll details (e.g., coating weights, edge characteristics, etc.), and/or various threshold values, for instance, as described in in U.S. Patent no. 18/144,657, titled: "Integrated Quality Monitoring View for Battery Manufacturing Process"; the entire contents of which is herein incorporated by reference.

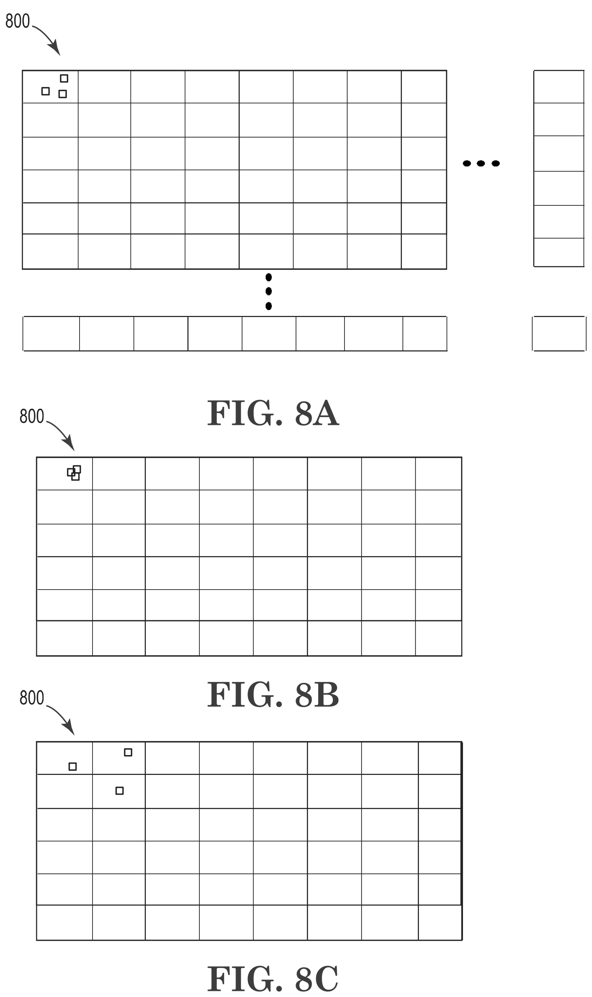

FIGS. 8A-8C illustrate examples of grid-based intelligent defect group using a grid 800 and visualizations. The grid 800 can include any quantity of grid cells e.g., as represented visually (e.g., with ellipses) in FIG. 8A. That is, FIGS. 8A-8C are merely illustrative of aspects herein and are not included to convey a particular quantity or size of the grid cells in the grid 800. The quantity of grid cells can be determined as described herein, for instance, based at least in part on a resolution and/or dimensions of a monitor.

As illustrated in FIG. 8A, a grid 800 can include a plurality of defects (individual defects represented by squares in FIG. 8A) within an individual grid cell of the grid. In such instances, each of the defects can be grouped together, as detailed herein. For instance, each of the defects in the individual grid cell of the grid 800 in FIG. 8A can be grouped together and the group can be displayed as a collection of overlapping individual icons which are collocated at a centroid of the group (e.g., each have a portion overlapping a weighted center point of the group), as illustrated FIG. 8B. Alternatively, the group can be displayed as individual representation located at the weighted centroid of the group of individual defects within the individual cell of the grid 800. However, as mentioned, when defects are located in different groups (e.g., entirely located within a grid and not having a portion thereof located on a border between grid cells), the respective defects can remain ungrouped. For instance, FIG. 8C illustrates individual defects (individual defects represented by squares in FIG. 8C) that remain ungrouped e.g., as the defects do not include any other defects within the respective grid cells in which individual defects are located. FIG. 8C, illustrates the same individual defects as a in FIG. 8A, but at a different zoom level (e.g., with a higher horizontal and/or vertical zoom). That is, zooming in or out on portions of all of the grid 800 can cause defects to be automatically grouped or ungrouped based on the respective locations of the individual defects at different horizontal and/or vertical zoom levels.

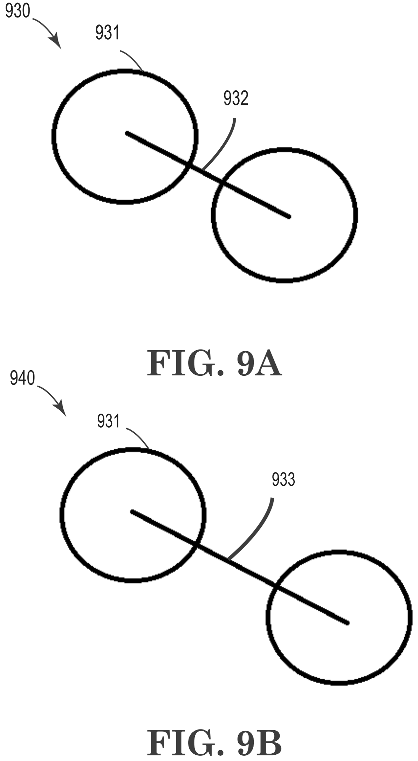

FIGS. 9A-9B illustrate examples of distance-based intelligent defect group and visualizations. As detailed herein, in some embodiments individual defects can be selectively grouped based on distances (e.g., Euclidean distances) located between the individual defects (e.g., between individual defect centers). For example, as illustrated in FIG 9A, the individual defects 931 can have a respective distance 932 therebetween that is within (e.g., less than) a configurable distance threshold value such as those described herein. Hence, the individual defects in 931 in FIG. 9A can be grouped together and an individual representation of the grouped defects can be displayed, as described herein. Conversely, as illustrated in FIG 9B, the individual defects 931 can have a respective distance 933 therebetween that is not within side of (e.g., is greater than or equal to) a configurable distance threshold value. Hence, the individual defects in 931 in FIG. 9B are not grouped together and can be represented as two respective representations that can each be displayed, as described herein.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of determining quality of a sheet roll, the method comprising:
monitoring data indicative of defects on either side of the sheet roll comprising data indicative of:
surface defects of the sheet roll;
registration defects of the sheet roll; and
quality and control system (QCS) defects of the sheet roll; and
grouping the defects into a group of defects;
calculating a weighted centroid for the group of defects; and
displaying a representation of the group of defects at the weighted centroid.

2. The method of claim 1, wherein the weighted centroid is based on a respective severity weights of each of the defects.

3. The method of claim 2, further comprising calculating a position of the weighted centroid according to (*w*₁*x*₁*+w*₁*x*₂*+···wₙxₙ*) / (*w*₁1*+w*₂*+*···*wₙ*) *,* (*w*1*y*1*+w*2*y*2*+···wnyn*) / (*w*1*+w*2*+···wn*); where:
"w₁", "w₂", ..., "wₙ" represent individual defect weights of the defects;
"x₁", "x₂", ..., "xₙ" are cross direction positions of the defects; and
"y₁", "y₂", ..., "yₙ" are machine direction positions of the defects.

4. The method of any of claims 1-3, wherein the representation of the group of defects is indicative of:
which side of the sheet roll the group of defects are located;
a location on the side of the sheet roll of the group of defects;
a type of the group of defects;
a severity of the group of defects; or
any combination thereof.

5. The method of claim 4, wherein the representation of the group of defects is indicative of which side of the sheet roll the group of defects are located.

6. The method of any of claims 1-5, further comprising:
calculating a spatial grid for the sheet roll; and
grouping the defects based on locations in the spatial grid.

7. The method of claim 6, further comprising calculating a quantity of grid cells in the spatial grid as a function of dimensions of the display, horizontal and vertical zoom levels within a display application and a minimum grid cell size .

8. The method of claim 7, further comprising calculating the total quantity of grid cells, wherein: $a horizontal grid cell count = f \left(W, HZ, MGS\right) = \left(W\times \left(HZ/100\right)\right) / MGS ;$ $a vertical grid cell count = f \left(H, VZ, MGS\right) = \left(H\times \left(VZ/100\right)\right) / MGS ;$ and the total grid cell count = f(H, W, HZ, VZ, MGS) = horizontal cell count x vertical cell count; and wherein: "H" is a vertical height a screen; "W" is a horizontal width of the screen; "HZ" is a horizontal zoom within the application display, "VZ" is a vertical zoom within the application display, and "MGS" is a minimum grid cell size.

9. The method of claim 7, further comprising grouping defects within same grid cell of a plurality of grid cells.

10. The method of claim 9, further comprising grouping an edge defect located on a grid boundary between two or more adjacent grid cells by:
calculating a distance to a nearby defect in one or more grid cells; and
grouping the edge defect with a most proximate defect in the one or more adjacent grid cells.

11. The method of any of claims 1-10, further comprising grouping the defects based on Euclidean distances between defect centers;
optionally wherein the Euclidean distances are determined according to d = √((x2-x1)² + (y2-y1)²) where x1,x2 are cross direction positions and y1,y2 are machine direction positions.

12. The method of claim 11, further comprising:
comparing the Euclidean distances to a configurable distance threshold value; and
grouping defects having Euclidean distance that are within the configurable distance threshold value.

13. The method of any of claims 1-12, further comprising taking a corrective action based on the representation of the group of defects at the weighted centroid.

14. A system for monitoring the production of a continuous sheet roll which travels in the machine direction (MD) that comprises:
a computer device that is configured to:
receive data from a plurality of sensors that measure one or more characteristics of the continuous sheet roll, the data being indicative of surface defects of the continuous sheet roll, registration defects of the continuous sheet roll, and quality and control system (QCS) defects of the continuous sheet roll;
group the defects into a group of defects based on Euclidean distances between the defects or locations of the defects in a spatial grid of the continuous sheet roll; and
calculate a weighted centroid for the group of defects; and
a display device that is configured to display:
an individual representation indicative of a MD location and a cross direction (CD) location of a weighted centroid of the group of defects at a first zoom level; and
a plurality of representations indicative of respective MD locations and CD locations each of the defects in the group of defects at a second zoom level that is higher than the first zoom level.

15. A non-transitory, computer-readable medium including instructions that when executed by a processor cause the processor to:
monitor data indicative of defects on either side of a continuous sheet roll the moves in a machine direction (MD), the data comprising data indicative of:
surface defects of the continuous sheet roll;
registration defects of the continuous sheet roll; and
quality and control system (QCS) defects of the continuous sheet roll;
group the defects into a group of defects based on Euclidean distances between the defects or locations of the defects in a spatial grid of the continuous sheet roll;
calculate a weighted centroid for the group of defects; and
display an image including a representation of the group of defects at the weighted centroid.
